Europäisches Patentamt

(19) European Patent Office (11) Publication number: **0 030 799**

Office européen des brevets **B1**

(12) **EUROPEAN PATENT SPECIFICATION**

(45) Date of publication of patent specification: **17.09.86** (51) Int. Cl.⁴: **A 01 K 9/00**

(21) Application number: **80304152.4**

(22) Date of filing: **20.11.80**

(54) **Apparatus for feeding animals.**

(30) Priority: **21.11.79 GB 7940252**

(43) Date of publication of application:
**24.06.81 Bulletin 81/25**

(45) Publication of the grant of the patent:
**17.09.86 Bulletin 86/38**

(84) Designated Contracting States:
**AT BE CH DE FR IT LI**

(56) References cited:
**DE-B-1 632 955**
**FR-A-1 398 786**
**FR-A-1 492 876**
**FR-A-2 127 403**
**GB-A- 760 391**
**GB-A- 787 194**
**US-A-1 630 982**
**US-A-2 506 205**
**US-A-2 610 830**
**US-A-2 638 870**
**US-A-3 043 265**
**US-A-3 204 607**
**US-A-3 352 286**

(73) Proprietor: **Collins, Colin John**
**Quarry Pits Farm**
**Inkberrow, Near Worcester Worcestershire (GB)**

(72) Inventor: **Collins, Colin John**
**Quarry Pits Farm**
**Inkberrow, Near Worcester Worcestershire (GB)**

(74) Representative: **Russell-Rayner, Albert Patrick**
**61 Pasture Road**
**Letchworth Hertfordshire, SG6 3LS (GB)**

## Description

This invention relates to apparatus for feeding animals.

In particular the present invention is concerned with the feeding of extremely young animals such as calves which are commonly weaned at any time from the second day after their birth.

Such very early weaning introduces several feeding problems and difficulties in husbandry of the animals.

The following list provides an indication of the nature of such difficulties and problems.

The need to ensure that each animal is provided with or receives adequate feed levels;

The necessity to have to teach the very young animals to feed from artificial feed devices;

The desirability of reducing as far as possible the time required by an operator or work person to feed a group of animals; and

The desirability of increasing the number of very young animals that can be handled at feeding time by a sole work person.

It is known from United States Patent No 2,506,205 to provide animal feeding apparatus including a feed trough mounted at fixed height by a rectangular frame supported on legs. A number of secondary containers depend downwardly from the trough, each such container being provided with a feed teat. With this apparatus the animals to be fed are free to wander from teat to teat so that an operator using such apparatus is not readily reliably able to monitor whether or not all of the calves to be fed receive adequate opportunity to feed.

United States Patent No 3,043,265 discloses apparatus for feeding calves. The apparatus disclosed includes a cylndrical container, whose interior is divided into eight separate chambers by radially directed walls, each such chamber is provided with a horizontally extending feed teat with a flow control valve. The container is supported at a fixed height at the centre of an octagonal penning arrangement having eight separate pens of triangular shape. With this pen a very space consuming construction is involved in relation to the number of calves that can be accommodated when in use. Also it involves inherent operator difficulties in that the operator needs to ensure that only one calf enters any one pen even though the pen entrances will accept two or more calves whilst at the same time having to move the calves around a circular path when driving the animals. A further problem arises in that when the pen is occupied by calves it is very difficult for the operator to gain access to the container either to fill or to check whether or not the calves are obtaining adequate feed, or are able to feed if very young.

It is an object of the present invention to provide animal feeding apparatus which at least contributes to the achieving of the above factors, by enabling easy operator access, height adjustments, and in-line penning.

According to the invention there is provided apparatus for assisting the feeding of animals such as calves or other farm animals with liquid feed, the apparatus including an elongate main container connecting with at least two gravity fillable spaced apart secondary containers each provided with liquid dispensing means including a teat, and each depending from the underside of the main container, the secondary containers being automatically filled with a liquid on filling the main container to a predetermined extent, characterised in that each secondary container teat is associated with a normally closed liquid flow control valve, the valve arangement being such that when an animal is sucking the teat the valve is caused to open so that liquid can be withdrawn from the associated secondary container and whilst the teat is not being used the valve is in its closed position, and in that the apparatus also includes a pen forming arrangement providing a plurality of side-by-side pen sections, the arrangement incorporating first frames, rails or the like members which serve to support the main and secondary containers in a position of use and in such manner as to allow for the adjustment of the operational height of the containers, and second frames, rails or like members which are connectable with the first frames, rails or the like members to provide side-by-side pen sections serving to isolate animals from each other whilst feeding from the secondary containers and also to allow the animals when feeding to both hear and see each other feeding.

Reference will now be made to the accompanying drawings in which:—

Figure 1 is a perspective view of an embodiment of apparatus incorporating features of the invention.

Figure 2 is a sectional view of the apparatus of Figure 1;

Figure 3 is an exploded view of a support frame for the apparatus of the invention and for providing individual pens for the animals using the apparatus;

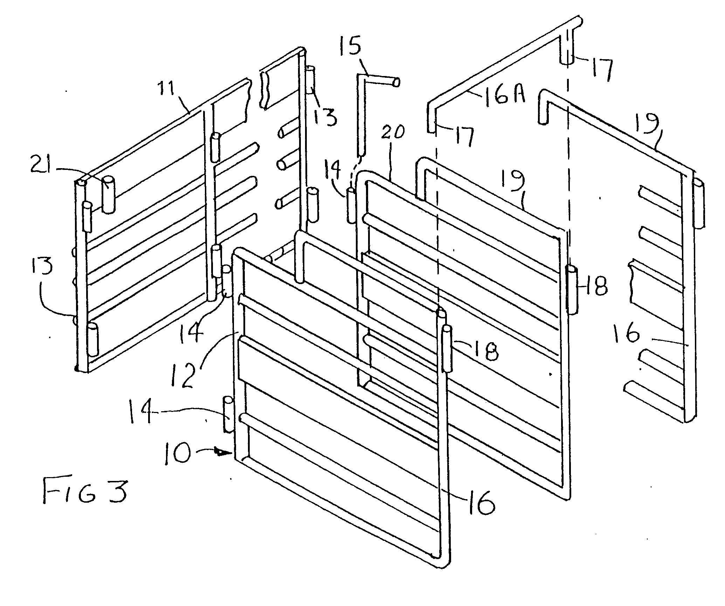

Figure 4 is a perspective view of a detail of the frame of Figure 3;

Figure 5 is an exploded view to an enlarged scale of further details of the frame of Figure 3;

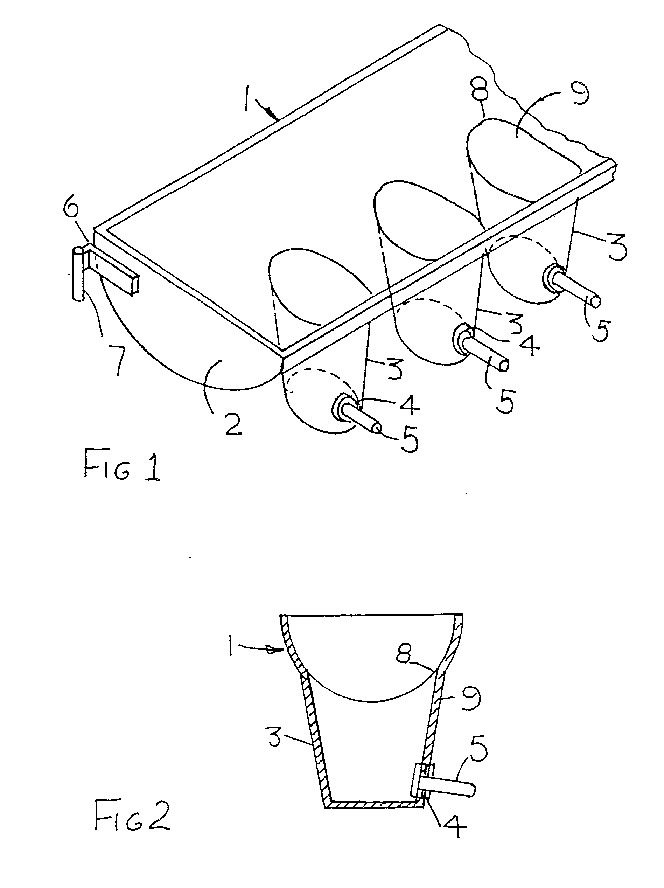

Referring now to the drawings and more particularly to Figure 1 which illustrates feed apparatus including an elongate trough 1 of a generally U-shaped cross-section with U-shaped end walls 2. Two or more secondary containers 3 depend from the bottom of the trough. Each said secondary container is provided with a liquid dispensing unit 4 including a teat 5 and a fluid flow control valve which is normally closed and which is not shown in the dawings.

The trough 1 is provided at each end thereof with a bracket 6 which carries mounting or locating pins 7 by means of which the trough can be readily mounted to a support plate, frame, eyelets or the like at such a height that the teats of the apparatus are positionally located at a height suitable to the animals that are to be fed from the apparatus. This support of the apparatus will be discussed in detail hereinafter.

In the trough construction shown the trough has formed therein a plurality of shaped apertures 8, one for each secondary container, which serve to receive and locate the upper regions 9 of the secondary containers such that these upper regions are flush with the adjacent periphery of the associated aperture. The joint region between the secondary container and the trough is sealed in fluid tight manner. If thought necessary a peripheral flange can be provided at the top region 9 this flange being shaped as to be able uniformly to abut the peripheral regions of the trough aperture in which the secondary container is located.

It will be understood that the secondary containers can be of a cylindrical form or of a tapered form i.e. in the form of a truncated cone. In each case the top region 9 thereof will be especially shaped to provide for the complex shape arising from the joining of two curved surfaces.

The teat unit control valve is such that the liquid in the associated secondary container flows into the teat through the valve. When an animal squeezes on the teat the opening provided in the end of the teat opens. At the same time the pressure produced in the teat forces the valve into its closed position to stop fluid flow from the secondary container. This pressure also serves to expel liquid from the teat. Thus the sucking action of the animal enables it to draw off liquid in amounts related to the sucking action.

In use sufficient liquid is introduced into the main trough 1 to fill it to such a level that not only are the associated secondary containers completely filled but a layer of fluid remains in the trough. This mode of filling ensures that every animal feeding from the unit must be able to draw-off a minimum quantity of liquid feed equal to the volume of the secondary container. In other words the amount of feed available to each animal is such that each animal is able to receive a predetermined amount of feed irrespective of the rate at which it is able to suck. It will be clear that the faster drinkers will be able to receive more than the basic minimum since the secondary containers will in the early stages of feeding be replenished from the excess which is initially in the main trough 1.

As has been mentioned the trough is mounted at a convenient feeding height for the animal.

The arrangements provided for the mounting of the trough provides for a limited amount of adjustment for height and for facilitating the actual mounting. In addition the mounting arrangements are combined with arrangements forming pens, stalls or the like which serve to keep the animals apart during feeding.

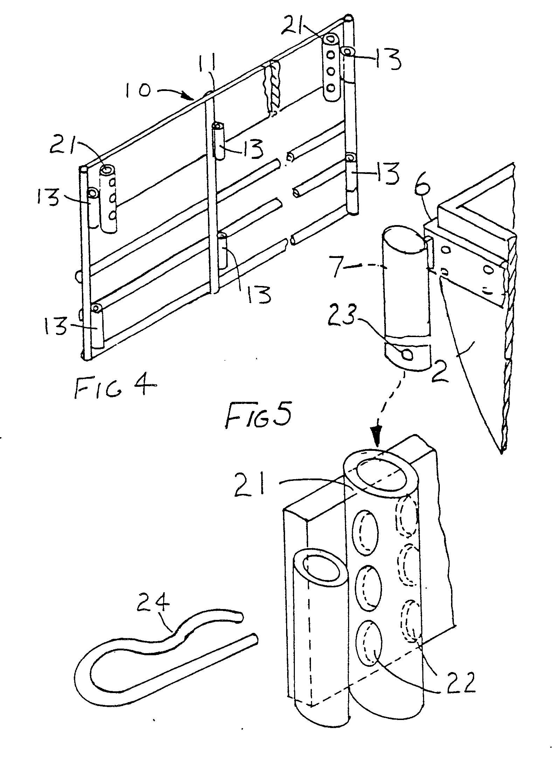

Referring now to Figure 3 this Figure shows in exploded form a convenient construction for the trough support arrangement and the pen forming arangements. It will be seen that a frame arrangement 10 includes a trough support section 11 and a plurality of side rails 12. The section 11 is provided with a series of pairs of sockets 13 with which are alignable complementary sockets 14 located at the front ends of the rails 12. The sockets are engaged by locking pins 15. The rear ends 16 of the side rails 12 are maintained in spaced relationship by a bridging or spacer bar 16A which is provided with pins 17 which engage with sockets 18 provided on the upper parts 19 of the rail rear ends 16.

The side rails 12 are reduced in height at their front end regions 20 so as to be able to accommodate the trough 1.

Also, in addition to the sockets previously mentioned the section 11 is provided with further sockets 21 for receiving the pins 7 associated with the trough 1.

To provide for the previously mentioned height adjustability a line of spaced bores 22 is provided in each socket 21 and a bore 23 is provided in each associated pin 7. Alternatively the line of bores could be in the pin 7 and a single bore in the associated socket. A spring clip 24 is used to engage with the bores 22 and 23 thereby firmly locking the trough 1 to the support section 11.

In utilising the above described apparatus to feed very young animals such as two day old calves it has been found very much to the surprise of highly experienced animal handling persons that the use of the above described apparatus demonstrated a totally unexpected advantage in that the time required for such very young calves to learn how to feed themselves was drastically reduced. Thus for example it was found that the number of people and the collective time required to train two day old calves to drink from a teat effectively reduced to teaching perhaps two or three of a group of, for example, fifteen calves to drink with the others rapidly following the actions of these two or three.

This factor is believed to arise from the fact that all of the calves are able to see and hear the calve or calves adjacent to them sucking at the teats so that they tend to follow the example. Hence it has been necessary only to teach two or three calves instead of having to teach all of the calves of a group as has always been the case with the conventional method of individual hand feeding.

In a modified arrangement not shown, the back bridging or spacer bar 16A can be fitted not at the top of the pen frames but at ground level. This modification has been found to facilitate operator access to individual pens for enabling inspection of animals or feeding assistance to individual animals.

The apparatus of the invention namely the container assembly lends itself to installation upon a framework which is mounted upon wheels, and which is intended to be transported relative to a series of fixed pen structures (not shown). In this arrangement a number of container main units which can, for example, include three secondary containers per main unit, can be mounted at an acceptable working level upon a wheeled trolley unit. This trolley can include a main section, which carries one of the main container units, and two outrigger like frames extending one from each end of the main frame, with each providing a support for a main container unit.

If desired, each such trolley cn be provided with or associated with a pen main or head frame which is long enough to span the trolley unit and its outriggers to provide a complementary unit.

This pen head frame is conveniently provided with a series of upright divider bars which allow the animals to put their heads through to gain access to the teats on the secondary containers, but which stop poaching between teats.

If desired, the pen main or head frame can be provided with a bottom rail arrangement which can be added to carry a dry feed tray unit — which can be sectioned to prevent poaching by the calves.

Following extensive trials in the use of the above discussed apparatus it has been additionally discovered and appreciated that further totally unexpected practical usage advantages and improvements in animal husbandry have resulted from the use of the apparatus of the invention. A very wide spread form of feeding livestock is the use of a centralised feeding area for animals with provision for a continuous supply of liquid feed to the animals from a group of freely available teats which alow the animals free access to the teats at all times without any control over the actual use of the teats by the animals on an individual basis. This mode of feeding is commonly called AD-LIB feeding.

The basic characteristic of this feeding method as has been mentioned is the free access of the animals to the teats without any control over the animals.

Whilst such a system has economic advantages in that there is no need for an operator to be in attendance or to otherwise monitor the feeding process, the system has an inherent defect in that it is possible for weaker or less dominant animals to be denied an adequate amount of feed and no doubt be denied food for perhaps a whole day. Whilst this may not appear to be of any great significance — in reality in the case of very young calves the lack of food for very short periods can lead to a rapid reduction in the growth and health of the calves in question. This problem of animals not receiving any food or too little food is wholly eliminated by the Applicant's proposals.

A further important provision is that by the provision of the separate feed stalls — an operator can readily and easily carry out the conventional medical checks which need to be effected on animals on an almost daily basis because all the animals are effectively individually presented to the operator without any risk of the odd calf or other animal being overlooked at any one health check.

As is well known in relation to bovine husbandry a days delay in diagnosis of some complaints or giving an injection to an animal can have catastrophic results — not only to the animal directly involved but in some circumstances a whole herd.

**Claim**

Apparatus for assisting the feeding of animals such as calves or other farm animals with liquid feed, the apparatus including an elongate main container (1) connecting with at least two gravity fillable spaced apart secondary containers (3) each provided with liquid dispensing means (4) including a teat (5), and each depending from the underside of the main container, the secondary containers being automatically filled with a liquid on filling the main container to a predetermined extent, characterised in that each secondary container teat is associated with a normally closed liquid flow control valve, the valve arrangement being such that when an animal is sucking the teat the valve is caused to open so that liquid can be withdrawn from the associated secondary container and whilst the teat is not being used the valve is in its closed position, and in that the apparatus also includes a pen forming arrangement (10) providing a plurality of side-by-side pen sections, the arrangement incorporating first frames, rails or the like members (11) which serve to support the main and secondary containers (1, 3) in a position of use and in such manner as to allow for the adjustment of the operational height of the containers (1, 3), and second frames, rails or the like members (12) which are connectable with the first frames, rails or the like members (11) to provide side-by-side pen sections serving to isolate animals from each other whilst feeding from the secondary containers (3) and also to allow the animals when feeding to both hear and see each other feeding.

**Patentanspruch**

Vorrichtung zum Unterstützen der Fütterung von Tieren, wie Kälbern oder anderen Zuchttieren, mit flüssiger Nahrung, welche Vorrichtung einen langgestreckten Hauptbehälter (1) aufweist, der mit mindestens zwei, durch Schwerkraft füllbaren, voneinander in Abstand angeordneten Nebenbehältern (3) verbunden ist, von denen jeder mit einen Sauger (5) aufweisenden Flüssigkeitsausgabemitteln (4) versehen ist und jeder von der Unterseite des Hauptbehälters herabhängt, wobei die Nebenbehälter selbsttätig mit einer Flüssigkeit gefüllt werden, wenn der Hauptbehälter bis zu einem vorbestimmten Grad gefüllt wird, dadurch gekennzeichnet, daß jeder Nebenbehältersauger mit einem normalerweise geschlossenen Steuerventil für den Flüssigkeitsdurchfluß verbunden ist, wobei die Ventilanordnung derart ist, daß dann, wenn ein Tier an dem Sauger saugt, das Ventil zum Öffnen veranlaßt wird, so daß Flüssigkeit vom zugeordneten Nebenbehälter abgezogen werden kann, wogegen dann, wenn der Sauger nicht benützt wird, das Ventil sich in einer geschlossenen Stellung befindet, und daß die Vorrichtung auch eine ein Gehege bilende Anlage (10) aufweist, welche eine Mehrzahl von nebeneinander befindlichen Gehegeabschnitten vorsieht, wobei die Anlage erste Rahmen, Schieber oder ähnliche Teile (11), welche dazu dienen, um den Hauptbehälter und die Nebenbehälter (1; 3) in einer Gebrauchsstellung und auch in solcher Weise abzustützen, um die Einstellung der Arbeitshöhe der Behälter (1; 3) zu erlauben, und zweite Rahmen, Schienen oder ähnliche Teile (12) aufweist, welche mit den ersten Rahmen, Schienen oder ähnlichen Teilen (11) verbindbar sind, um nebeneinander Gehegeabschnitte vorzusehen, welche zum gegenseitigen Separieren der Tiere während des Fütterns aus den Nebenbehältern (3) und auch dazu dienen, um den Tieren beim Ernähren zu erlauben, sich einander sowohl ernähren zu sehen als auch zu hören.

**Revendication**

Appareil destiné à aider l'alimentation d'animaux tels que veaux et autres animaux de ferme avec de la nourriture liquide, l'appareil comprenant un récipient principal allongé (1) communiquant avec au moins deux récipients secondaires (3) espacés l'un de l'autre et se remplissant par gravité, chacun d'eux étant équipé de moyens distributeurs de liquide (4) munis d'une tétine (5) et étant suspendu au fond du récipient principal, les récipients secondaires se remplissant automatiquement de liquide lorsqu'on remplit le récipient principal d'une quantité donnée, caractérisé en ce que la tétine de chaque récipient secondaire est associée à une valve normalement fermée réglant l'écoulement de liquide, la valve étant agencée de telle sorte que lorsqu'un animal se met à sucer la tétine, la valve est amenée à s'ouvrir pour permettre à du liquide d'être soutiré du récipient secondaire correspondant, la valve occupant sa position fermée lorsque la tétine n'est pas sollicitée, et en ce que l'appareil comprend en outre un dispositif (10) formant parc ménageant plusieurs compartiments adjacents, ce dispositif comportant des premiers cadres, barres ou organes analogues (11) servant à supporter les récipients principal et secondaires (1; 3) en une position d'utilisation et de manière à permettre un réglage de la hauteur opérationnelle des récipients (1; 3), et des seconds cadres, barres ou organes analogues (12) pouvant être connectés aux premiers cadres, barres ou organes analogues (11) pour réaliser des compartiments adjacents servant à isoler les animaux les uns des autres pendant qu'ils s'alimentent aux récipients secondaires (3) et permettant en outre aux animaux, pendant qu'ils s'alimentent, de s'entendre et de se voir s'alimenter les uns les autres.

Fig 1

Fig 2

FIG 4

FIG 5

FIG 3